(19) **Europäisches Patentamt European Patent Office Office européen des brevets**

(11) **EP 1 591 645 B1**

(12) **FASCICULE DE BREVET EUROPEEN**

(45) Date de publication et mention de la délivrance du brevet:
**30.11.2016 Bulletin 2016/48**

(51) Int Cl.:
***F02C 9/28*** (2006.01)

(21) Numéro de dépôt: **05009059.6**

(22) Date de dépôt: **26.04.2005**

(54) **Dispositif et procédé de régulation du débit carburant d'un turbomoteur**

Verfahren und Anordnung zur Regulierung des Brennstoffmengenstromes einer Turbomaschine

Method and device for fuel flow regulation of a turbomachine

(84) Etats contractants désignés:
**DE GB**

(30) Priorité: **28.04.2004 FR 0404532**

(43) Date de publication de la demande:
**02.11.2005 Bulletin 2005/44**

(73) Titulaire: **Airbus Helicopters**
**13725 Marignane Cedex (FR)**

(72) Inventeur: **Certain, Bernard**
**13090 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**GB-A- 1 257 072      US-A- 4 195 231**
**US-A- 4 435 957      US-A- 4 651 518**
**US-A1- 2001 045 088   US-A1- 2002 104 308**

# Description

La présente invention concerne un dispositif et un procédé de régulation du débit de carburant d'un turbomoteur de giravion permettant de contrôler parfaitement soit l'accélération, soit la décélération ou encore l'accélération et la décélération de ce turbomoteur.

Ce type de turbomoteur est équipé d'un système de régulation qui a pour fonction principale de réguler en vol, via le débit carburant, la puissance délivrée par le turbomoteur. La vitesse de rotation du rotor principal, d'avancement et de sustentation, du giravion est alors maintenue à une valeur sensiblement constante.

En effet, un giravion est notamment piloté en agissant sur le pas des pales de ce rotor principal. Une augmentation de ce pas a pour conséquence une chute rapide de la vitesse de rotation de ce rotor. Le turbomoteur doit alors accélérer rapidement de manière à compenser cette chute pour que le giravion puisse être maintenu en vol. De la même façon, lors de la baisse du pas des pales, il faut décélérer le turbomoteur pour que la vitesse de rotation du rotor ne dépasse pas la limite fixée par le constructeur.

De plus, la régulation du débit carburant doit être scrupuleusement contrôlée pour permettre une augmentation de la puissance absorbée par le rotor principal sans risque de pompage pour le turbomoteur. Ce pompage est un phénomène qui affecte les compresseurs des turbomoteurs lorsque localement, l'incidence trop élevée d'une aube ou d'un redresseur provoque un décrochage aérodynamique qui réduit considérablement le débit d'air. Une conséquence de ce phénomène est une surchauffe dans la chambre de combustion pouvant être à l'origine de la détérioration d'une turbine du turbomoteur.

De même, la décélération doit aussi être contrôlée pour éviter une extinction du turbomoteur.

Les documents US200211/04308, US2001/045088, US4195231, GB1257077 ou encore US4275557 permettent notamment d'évaluer l'arrière plan technologique de l'invention.

Par exemple, le document US2002/104308 décrit un dispositif pour réguler le débit carburant d'un turbomoteur de giravion en fonction de la vitesse de rotation du générateur de gaz du turbomoteur, de la vitesse de rotation de la turbine libre du turbomoteur, de la vitesse de rotation du rotor du giravion, de la température à la sortie de la turbine libre du turbomoteur, du couple moteur, et du pas collectif des pales du rotor du giravion.

Selon le document US4275557, un turbomoteur comporte un organe qui règle la vitesse du compresseur pour protéger le turbomoteur contre une surchauffe, voir aussi US 307 451.

Par ailleurs, on connaît un dispositif de régulation électronique, dénommé FADEC (« *Full Autorithy Digital Engine Control* » selon l'appellation anglaise) par l'homme du métier. Des lois de régulation, d'accélération ou de décélération par exemple, sont programmées dans le FADEC afin que ce dernier puisse réguler le débit carburant sans risque de pompage ou d'extinction pour le turbomoteur.

De plus, le FADEC reçoit des signaux de capteurs mesurant différents paramètres du turbomoteur, notamment la pression à la sortie des étages de compresseurs, le régime du générateur de gaz, le régime de la turbine libre et la température interne à l'entrée de la turbine libre respectivement dénommés P3, Ng, NTL et T4 par l'homme du métier. En fonction de ces informations, le FADEC utilise des lois de régulation pour commander un actionneur qui ajuste le débit de carburant en jouant sur la position du doseur carburant du turbomoteur.

Ce dispositif donne satisfaction mais sa fiabilité est insuffisante pour garantir à lui seul la sécurité du vol. Des systèmes de secours doivent alors être installés sur le giravion pour remédier à cet inconvénient.

En effet, les lois de régulation utilisées pour les turbomoteurs de giravion dépendent du quotient du débit carburant par la pression P3. La justification de ce principe réside dans son caractère stabilisateur puisqu'en cas de pompage, la pression P3 chute et entraîne alors une baisse du débit carburant ce qui permet souvent de sortir du phénomène. Malheureusement, le retour d'expérience montre que le capteur de la pression P3. particulièrement fragile, est à l'origine d'un grand nombre d'anomalies.

La présente invention a pour objet de proposer un dispositif permettant d'augmenter la fiabilité d'un régulateur de débit carburant de turbomoteur de giravion en utilisant des lois de régulation d'un type nouveau ne dépendant pas de la pression P3.

Selon l'invention, un dispositif de régulation en accélération ou en décélération du débit carburant d'un turbomoteur, muni d'une turbine libre, d'un générateur de gaz, comporte des capteurs transmettant à un moyen de régulation des informations relatives à un premier régime de rotation NTL de ladite turbine libre, à un deuxième régime de rotation Ng dudit générateur de gaz, à une température interne T4 des gaz à l'entrée de la turbine libre, à la pression extérieure puis à la température extérieure. Ce dispositif comporte de plus un moyen de commande activé par ce moyen de régulation pour actionner un doseur carburant du turbomoteur.

Le dispositif selon l'invention est remarquable puisque ce moyen de régulation évalue en accélération ou en décélération le débit de carburant à fournir au turbomoteur à partir d'au moins une loi de régulation optimale, cette loi de régulation optimale déterminant un débit modulé principal en fonction d'un régime de rotation modulé, le débit modulé principal dépendant de la température extérieure ainsi que de la pression extérieure, le régime de rotation modulé correspondant quand à lui au deuxième régime de rotation Ng modulé par la température extérieure. En fonction de la situation, le moyen de régulation utilisera une loi de régulation optimale en accélération ou en décélération.

Le capteur de pression P3 n'intervient donc pas dans la régulation du débit ce qui permet d'augmenter sensiblement la fiabilité du dispositif.

En outre, le débit modulé principal selon l'invention est égal à un débit modulé primaire. Ce dernier est obtenu par la première relation suivante où CH' représente le débit modulé primaire, CH le débit de carburant fourni au turbomoteur, P0 la pression extérieure, T0 la température extérieur, $\alpha$ une première puissance et $\beta$ une deuxième puissance :

$$CH' = CH\left(\frac{1013}{P0}\right)^{\alpha}\left(\frac{288}{T0}\right)^{\beta}$$

Les première $\alpha$ et deuxième $\beta$ puissances dépendent exclusivement du type de turbomoteur. L'expérience montre que la régulation du débit carburant est optimisée, lors d'une accélération, avec une première puissance $\alpha$ comprise entre 0,9 et 1,05 et une deuxième puissance $\beta$ comprise entre 0,6 et 0,9.

Nous verrons par la suite que l'utilisation du débit modulé primaire implique l'emploi d'une pluralité de lois de régulation optimale en accélération et en décélération, chaque loi étant liée à une altitude.

Par contre, on obtient une unique loi de régulation optimale en accélération et une unique loi en décélération, valable quelque soit l'altitude, lorsque le débit modulé principal est égal à un débit modulé secondaire. Ce dernier est alors obtenu par la deuxième relation suivante où CH" représente le débit modulé secondaire. CH' le débit modulé primaire, T0 la température extérieure :

$$CH'' = CH'\left(\frac{288}{T0}\right)$$

Compte tenu de la première relation précédemment décrite, cette deuxième relation peut aussi s'écrire :

$$CH'' = CH\left(\frac{1013}{P0}\right)^{\alpha}\left(\frac{288}{T0}\right)^{\beta+1}$$

Par ailleurs, le dispositif décrit ci-dessus permet en théorie d'éviter le pompage ou l'extinction du turbomoteur dans la mesure où le débit carburant est parfaitement contrôlé. Cependant, la ou les lois de régulation optimales sont déterminées lors d'essais réalisés sur un moteur neuf. Or, avec l'usure (frein sur l'arbre de transmission, aubes du compresseur endommagées...), les performances de ce dernier sont dégradées ce qui pourrait alors conduire à un pompage ou à une extinction.

Pour éviter une extinction, le moyen de commande, un moteur pas à pas par exemple, possède une butée inférieure, ce qui garantit un débit de carburant minimal au turbomoteur. De plus, dans le but d'augmenter la sécurité, le doseur carburant comporte lui aussi une butée inférieure.

Concernant le pompage du turbomoteur, on constate, avant et après ce phénomène, une élévation anormale de la température interne T4. Dans ces conditions, une limite basée sur cette température interne T4 permet de résoudre le problème en l'anticipant.

Dans ces conditions, le moyen de régulation limite l'augmentation du débit carburant lorsque la dérivée de ladite température interne par rapport au temps à une valeur égale à un seuil prédéterminé.

En outre, ce seuil prédéterminé correspond, dans un diagramme où la température interne T4 est en abscisse et la dérivée par rapport au temps de la température interne T4 en ordonnée, à une droite limite

d'équation $T4 + k\dfrac{d}{dt}(T4) = T4max$, k et T4max

étant des constantes évaluées par essai pour chaque turbomoteur.

La présente invention a de plus pour objet un procédé pour limiter l'augmentation du débit carburant d'un turbomoteur lorsque le seuil prédéterminé est atteint.

Selon l'invention, le procédé est remarquable puisque :

- le moyen de régulation fige, pendant une première durée t1, le débit carburant lorsque la dérivée de la température interne T4 par rapport au temps a une valeur au moins égale au seuil prédéterminé.

- à l'issue de la première durée t1, le moyen de régulation évalue le débit de carburant à fournir au turbomoteur à partir d'au moins une loi de régulation dégradée pendant une deuxième durée t2.

- à l'issue de la deuxième durée t2, le moyen de régulation évalue le débit de carburant à fournir au turbomoteur à partir de la loi de régulation optimale.

De plus, cette loi de régulation dégradée est homothétique à la loi de régulation optimale en accélération tout en restant supérieure à une loi de régulation en fonctionnement normal.

Dans une variante de ce procédé, à l'issue de la première durée t1, le moyen de régulation évalue le débit de carburant à fournir au turbomoteur à partir de la loi de régulation optimale en accélération.

L'invention et ses avantages apparaîtront avec plus de détails dans le cadre de la description, qui suit avec deux exemples de réalisation donnés à titre illustratif en référence aux figures annexées qui représentent :

- la figure 1, une vue schématique d'un dispositif selon l'invention,

- la figure 2, un diagramme présentant les lois de régulation optimales en accélération et en décélération,

- la figure 3, un diagramme explicitant le fonctionnement de la régulation en accélération,

- la figure 4, un diagramme montrant des lois de régulation selon un premier mode de réalisation,

- la figure 5, un diagramme montrant des lois de régulation selon un deuxième mode de réalisation,

- la figure 6, un diagramme présentant l'évolution de la température interne T4, et

- la figure 7, un diagramme explicitant le procédé selon l'invention.

Les éléments présents dans plusieurs figures distinctes sont affectés d'une seule et même référence.

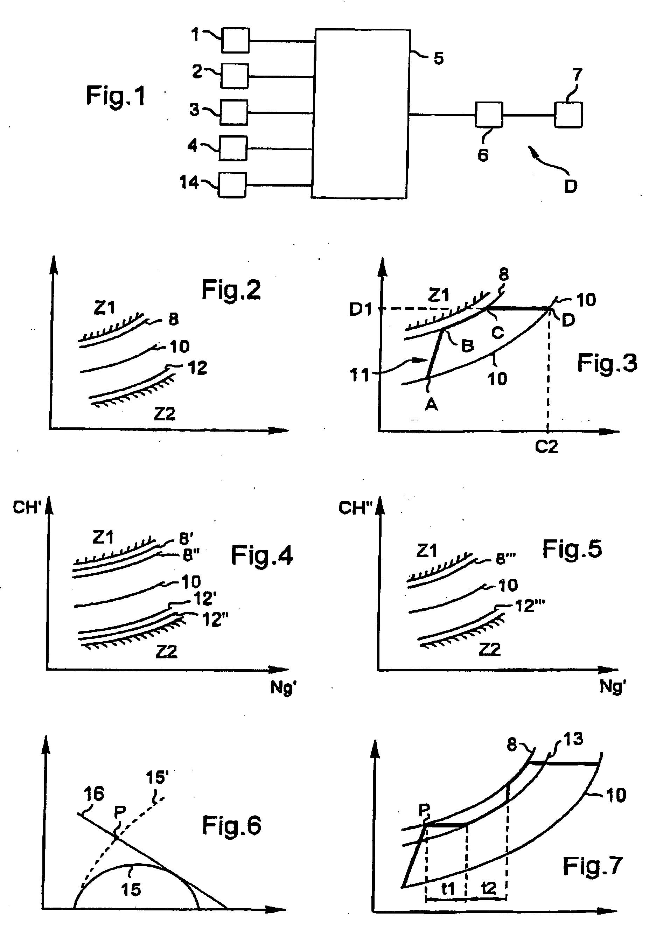

La figure 1 présente une vue schématique d'un dispositif D selon l'invention.

Ce dispositif D comporte des capteurs 1, 2, 3, 4, 14, un moyen de régulation 5, un moyen de commande 6 et un doseur carburant 7.

Les capteurs 1, 2, 3, 4, 14 transmettent des informations au moyen de régulation 5 relatives respectivement à :

- un premier régime de rotation NTL de la turbine libre d'un turbomoteur,

- un deuxième régime de rotation Ng du générateur de gaz du turbomoteur,

- une température interne T4 des gaz à l'entrée de la turbine libre du turbomoteur,

- la pression extérieure dénommée P0 par l'homme du métier, et

- la température extérieure dénommée T0 par l'homme du métier.

Le capteur 1 mesure le premier régime de rotation NTL. Ce dernier est proportionnel à la vitesse de rotation, sensiblement constante, du rotor d'avancement et de sustentation du giravion.

Par ailleurs, une première consigne, correspondant à la valeur que doit avoir le premier régime de rotation NTL pour que la vitesse de rotation du rotor soit idéale, est fixée par le constructeur.

De ce fait, si le premier régime de rotation NTL est différent de cette première consigne, le moyen de régulation 5 accélère ou décélère le turbomoteur pour obtenir la vitesse de rotation idéale du rotor.

Dans ces conditions, le moyen de régulation 5,

détermine une deuxième consigne. Cette dernière correspond à la valeur que doit atteindre le deuxième régime de rotation Ng pour que le premier régime de rotation NTL soit égal à la première consigne.

Le moyen de régulation 5 utilise alors les informations transmises par les capteurs 2, 3, 4, 14 et ses programmes de régulations (lois de régulation optimales en accélération ou en décélération, butée inférieure ou seuil prédéterminé) pour déterminer le débit carburant à fournir au turbomoteur. L'augmentation ou la baisse du débit carburant sera stoppée lorsque le deuxième régime de rotation Ng aura atteint la deuxième consigne.

La figure 2 présente un diagramme montrant les lois de régulation optimales en accélération 8 et en décélération 12, déterminant un débit modulé principal en fonction d'un régime de rotation modulé. Dans ce diagramme, le débit carburant modulé principal se trouve en ordonnée et le régime de rotation modulé en abscisse. Nous verrons par la suite que le débit modulé principal peut être égal à un débit modulé primaire ou secondaire. Par ailleurs, le régime de rotation modulé, dénommé Ng' dans la suite du texte par raison de commodité, est déterminé par la formule suivante :

$$Ng' = Ng\sqrt{\frac{288}{T0}}$$

La zone hachurée Z1 représente la zone dans laquelle le phénomène de pompage du turbomoteur apparaît. A contrario, la zone hachurée Z2 représente la zone dans laquelle le turbomoteur s'éteint pour cause de débit carburant insuffisant.

Afin de protéger le turbomoteur, le constructeur détermine par essais, une loi de régulation 10 en fonctionnement normal, au moins une loi de régulation optimale en accélération 8 et au moins une loi de régulation optimale en décélération 12. Ces trois lois, déterminant le débit modulé principal en fonction du régime de rotation modulé Ng', permettent au moyen de régulation 5 d'évaluer le débit carburant à fournir au turbomoteur.

De plus, les lois de régulation optimales en accélération 8 et en décélération 12 sont respectivement proches des zones Z1 et Z2 mais ne les atteignent pas de manière à conserver une marge de sécurité.

La figure 3 présente un diagramme explicitant le principe de fonctionnement de la régulation en accélération. Dans ce diagramme, le débit modulé principal se trouve en ordonnée et le régime de rotation modulé en abscisse. Bien que non explicité par une figure, le principe de fonctionnement de la régulation en décélération est identique à celui décrit ci-dessous.

La loi de régulation 10 en fonctionnement normal et une loi de régulation optimale en accélération 8 sont représentées sur cette figure.

En outre, la courbe 11, en gras sur la figure 3, montre l'évolution du débit carburant au cours d'une accélération du turbomoteur, cette dernière débutant par exemple au point A et se terminant au point D. Le premier régime de rotation NTL est dans ce cas inférieur à la première consigne, fixée par le constructeur. Le moyen de régulation 5 doit donc accélérer le moteur pour augmenter ce premier régime de rotation NTL.

De ce fait, le moyen de régulation 5 détermine une deuxième consigne que doit atteindre le deuxième régime de rotation Ng pour que le premier régime de rotation NTL soit égal à la première consigne. A partir de cette deuxième consigne, le moyen de régulation 5 calcule, à l'aide de la formule précédente, la valeur prescrite C2 que doit atteindre le régime de rotation modulé Ng'. Selon la loi de régulation optimale en fonctionnement normal 10, le débit modulé principal doit alors valoir D1. Le dispositif pourrait accélérer en suivant cette loi mais l'accélération serait alors lente ce qui pourrait devenir problématique pour la sécurité du vol.

Dans ces conditions, il est impératif d'accélérer le turbomoteur le plus rapidement possible.

Dans un premier temps, correspondant au segment AB, le moyen de régulation 5 augmente fortement le débit carburant de manière à rejoindre le plus rapidement possible la loi de régulation optimale en accélération 8. A ce stade de la régulation, le débit carburant est augmenté de la valeur maximale autorisée par le turbomoteur ce qui explique la forte pente du segment AB.

Dans un second temps, correspondant au segment BC, le débit carburant ne peut plus être augmenté selon les mêmes proportions que précédemment. En effet, si c'était le cas, la zone hachurée Z1 serait atteinte entraînant ainsi le pompage du turbomoteur. Pour optimiser l'augmentation du débit carburant, le moyen de régulation 5 évalue donc le débit de carburant à fournir au turbomoteur à partir de la loi de régulation optimale en accélération 8.

Enfin, à partir du point C, le débit modulé principal vaut D1. Le régime de rotation modulé augmente alors progressivement et naturellement pour finalement valoir C2.

On se rend donc bien compte que l'augmentation du débit carburant, et par conséquent l'accélération du turbomoteur, a été optimisée de manière à être effectuée le plus rapidement possible.

La figure 4 présente un diagramme montrant des lois de régulation selon un premier mode de réalisation. Dans ce mode de réalisation, le débit modulé principal est égal à un débit modulé primaire.

Ce dernier est obtenu par la première relation suivante où CH' représente le débit modulé primaire, CH le débit de carburant fourni au turbomoteur, P0 la pression extérieur, T0 la température extérieur, $\alpha$ une première puissance et $\beta$ une deuxième puissance :

$$CH' = CH\left(\frac{1013}{P0}\right)^{\alpha}\left(\frac{288}{T0}\right)^{\beta}$$

Les première $\alpha$ et deuxième $\beta$ puissances dépendent exclusivement du type de turbomoteur. L'expérience montre que la régulation du débit carburant est optimisée, lors d'une accélération, avec une première puissance a comprise entre 0,9 et 1,05 et une deuxième puissance $\beta$ comprise entre 0,6 et 0,9.

En outre, lorsque le débit modulé principal est égal à ce débit modulé primaire, il existe une pluralité de lois de régulation optimale en accélération dépendant de l'altitude, une loi à haute altitude 8' et une autre loi à basse altitude 8" par exemple. De la même manière, il existe une pluralité de lois de régulation optimale en décélération, homothétique aux lois de régulation optimale en accélération, dépendant de l'altitude, une loi à haute altitude 12' et une autre loi à basse altitude 12" par exemple.

A contrario, selon un deuxième mode de réalisation, en référence à la figure 5, lorsque le débit modulé principal est égal à un débit modulé secondaire, on obtient une loi de régulation optimale unique en accélération 8''' et en décélération 12''', valables quelque soit l'altitude.

Dans ces conditions, le débit modulé secondaire est obtenu par la deuxième relation suivante où CH" représente le débit modulé secondaire, CH' le débit modulé primaire, T0 la température extérieure :

$$CH'' = CH'\left(\frac{288}{T0}\right)$$

Le dispositif que l'on vient de décrire contrôle parfaitement le débit carburant d'un turbomoteur. Cependant, la ou les lois de régulation optimale sont établies à partir d'essais réalisés sur un turbomoteur en parfait état. Avec l'usure, les performances de ce dernier peuvent être dégradées ce qui peut modifier la géométrie des zones hachurées Z1, Z2. De ce fait, il est possible qu'un pompage ou qu'une extinction du turbomoteur se produise. De ce fait, une butée inférieure et un seuil prédéterminé sont introduits dans le système afin de prévenir un désagrément de ce type.

Pour éviter une extinction du turbomoteur, le moyen de commande 6 comporte une butée inférieure ce qui interdit la possibilité d'avoir un débit carburant trop faible. Par mesure de sécurité, le doseur carburant est lui aussi pourvu d'une butée inférieure.

Concernant le pompage, l'expérience a démontré que ce phénomène est accompagné d'une forte hausse de la température interne T4. Par conséquent, le moyen de régulation 5 limite l'augmentation du débit carburant lorsque la dérivée de la température interne T4 par rapport au temps a une valeur au moins égale à un seuil prédéterminé.

En référence à la figure 6, ce seuil prédéterminé correspond, dans un diagramme où la température interne T4 est en abscisse et la dérivée par rapport au temps de la température interne T4 en ordonnée, à une droite limite 16 d'équation

$$T4 + k\frac{d}{dt}(T4) = T4max$$ , k et T4max étant des constantes évaluées par essai pour chaque turbomoteur.

La courbe 15 présente l'évolution de la température interne T4 en fonctionnement normal. La courbe 15' présente une évolution anormale de la température interne T4 pouvant conduire à un pompage.

En comparant l'évolution de la température interne T4 à la droite limite 16, on peut prévoir et éviter le pompage quelques dixièmes de secondes avant son apparition. Pour cela, au point P, il faut stopper l'augmentation du débit carburant et définir un nouveau programme de régulation.

La figure 7 présente un diagramme explicitant un procédé permettant de limiter l'augmentation du débit carburant lorsque le seuil prédéterminé, par exemple le point P, est atteint.

Dans un premier temps, la régulation se déroule correctement. Cependant, au point P, il est impératif de limiter le débit carburant pour éviter le pompage du turbomoteur.

Le moyen de régulation 5 fige alors le débit pendant une première durée t1 afin de passer sur une loi de régulation dégradée 13.

A l'issue de cette première durée t1, le moyen de régulation 5 évalue le débit à fournir au turbomoteur à partir de la loi de régulation dégradée 13 pendant une deuxième durée t2.

A l'issue de cette deuxième durée t2, le débit carburant est de nouveau augmenté afin d'être évalué à partir de la loi de régulation optimale en accélération 8. Le processus de régulation du débit reprend alors son cours normal.

De plus, cette loi de régulation dégradée 13 est homothétique à la loi de régulation optimale en accélération 8, tout en restant supérieure à la loi de régulation en fonctionnement normal 10.

Dans une variante de ce procédé, à l'issue de la première durée t1, le moyen de régulation évalue le débit de carburant à fournir au turbomoteur à partir de la loi de régulation optimale en accélération 8.

Naturellement, la présente invention est sujette à de nombreuses variations quant à sa mise en oeuvre. Bien que deux modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Dispositif de régulation (D) en accélération ou en décélération du débit carburant d'un turbomoteur, muni d'une turbine libre et d'un générateur de gaz, comportant des capteurs (1,2,3,4,14) transmettant à un moyen de régulation (5) des informations relatives à un premier régime (NTL) de rotation de ladite turbine libre, à un deuxième régime de rotation (Ng) dudit générateur de gaz, à une température interne (T4) des gaz à l'entrée de la turbine libre, à la pression extérieure (P0) puis à la température extérieure (T0), et comportant de plus un moyen de commande (6) activé par ledit moyen de régulation (5) pour actionner un doseur carburant (7) dudit turbomoteur, ledit moyen de régulation (5) évalue en accélération ou en décélération le débit de carburant à fournir audit turbomoteur à partir d'au moins une loi de régulation optimale (8,8',8'',12,12',12''), ladite loi de régulation (8,8',8'',12,12',12'') déterminant un débit modulé principal en fonction d'un régime de rotation modulé (Ng'), ledit débit modulé principal dépendant de la température extérieure (T0) ainsi que de la pression extérieure (P0) et ledit régime de rotation modulé (Ng') correspondant au deuxième régime de rotation (Ng) dudit générateur de gaz modulé par la température extérieure (T0).
**caractérisé en ce que** ledit débit modulé principal est égal à un débit modulé primaire (CH') qui est obtenu par la première relation suivante où CH' représente ledit débit modulé primaire, CH le débit de carburant fourni au turbomoteur, P0 la pression extérieure, T0 la température extérieure, a une première puissance et β une deuxième puissance :

$$CH' = CH\left(\frac{1013}{P0}\right)^\alpha\left(\frac{288}{T0}\right)^\beta$$

2. Dispositif de régulation (D) en accélération ou en décélération du débit carburant d'un turbomoteur, muni d'une turbine libre et d'un générateur de gaz, comportant des capteurs (1,2,3,4,14) transmettant à un moyen de régulation (5) des informations relatives à un premier régime (NTL) de rotation de ladite turbine libre, à un deuxième régime de rotation (Ng) dudit générateur de gaz, à une température interne (T4) des gaz à l'entrée de la turbine libre, à la pression extérieure (P0) puis à la température extérieure (T0), et comportant de plus un moyen de commande (6) activé par ledit moyen de régulation (5) pour actionner un doseur carburant (7) dudit turbomoteur, ledit moyen de régulation (5) évalue en accélération ou en décélération le débit de carburant à fournir audit turbomoteur à partir d'au moins une loi de régulation optimale (8,8',8'',12,12',12''), ladite loi de régulation (8,8',8'',12,12',12'') déterminant un débit modulé principal en fonction d'un régime de rotation modulé (Ng'), ledit débit modulé principal dépendant de la température extérieure (T0) ainsi que de la pression extérieure (P0) et ledit régime de rotation modulé (Ng') correspondant au deuxième régime de rotation (Ng) dudit générateur de gaz modulé par la température extérieure (T0).

**caractérisé en ce que** ledit débit modulé principal est égal à un débit modulé secondaire (CH") qui est obtenu par la deuxième relation suivante où CH" représente ledit débit modulé secondaire, CH le débit de carburant fourni au turbomoteur, P0 la pression extérieure, T0 la température extérieure, α une première puissance et β une deuxième puissance :

$$CH'' = CH(\frac{1013}{P0})^{\alpha}(\frac{288}{T0})^{\beta+1}$$

3. Dispositif selon l'une quelconque des revendications 1 à 2,
   **caractérisé en ce que** ladite première puissance α est comprise entre 0.9 et 1,05.

4. Dispositif selon l'une quelconque des revendications 1 à 3,
   **caractérisé en ce que** ladite deuxième puissance β est comprise entre 0.6 et 0.9.

5. Dispositif selon l'une quelconque des revendications précédentes,
   **caractérisé en ce que** ledit moyen de régulation (5) limite l'augmentation dudit débit carburant lorsque la dérivée de ladite température interne (T4) par rapport au temps a une valeur au moins égale à un seuil prédéterminé.

6. Dispositif selon la revendication 5,
   **caractérisé en ce que** ledit seuil prédéterminé correspond, dans un diagramme où ladite température interne (T4) est en abscisse et ladite dérivée de la température interne (T4) en ordonnée, à une droite limite d'équation $T4 + k\frac{d}{dt}(T4) = T4max$ , k et T4max étant des constantes.

7. Dispositif selon l'une quelconque des revendications précédentes,
   **caractérisé en ce que** ledit moyen de commande (6) possède une butée inférieure.

8. Dispositif selon l'une quelconque des revendications précédentes,
   **caractérisé en ce que** ledit moyen de commande (6) est un moteur pas à pas.

9. Procédé mis en oeuvre par un dispositif selon l'une quelconque des revendications 5 et 6 pour limiter l'augmentation du débit carburant d'un turbomoteur lorsque ledit seuil prédéterminé est atteint,
   **caractérisé en ce que** ledit moyen de régulation (5) fige, pendant une première durée (t1), ledit débit carburant lorsque la dérivée de ladite température interne (T4) par rapport au temps a une valeur au moins égale au seuil prédéterminé.

10. Procédé selon la revendication 9,
    **caractérisé en ce que** :

    a) A l'issue de la première durée (t1), ledit moyen de régulation (5) évalue le débit de carburant à fournir audit turbomoteur à partir d'au moins une loi de régulation dégradée (13) pendant une deuxième durée (t2).
    b) A l'issue de ladite deuxième durée (t2), ledit moyen de régulation (5) évalue le débit de carburant à fournir audit turbomoteur à partir de ladite loi de régulation optimale en accélération (8).

11. Procédé selon la revendication 10,
    **caractérisé en ce que** ladite loi de régulation dégradée (13) est homothétique à ladite loi de régulation optimale en accélération (8), tout en restant supérieure à une loi de régulation en fonctionnement normal (10).

12. Procédé selon la revendication 9,
    **caractérisé en ce que**, à l'issue de la première durée (t1), ledit moyen de régulation (5) évalue le débit de carburant à fournir audit turbomoteur à partir de ladite loi de régulation optimale en accélération (8).

**Patentansprüche**

1. Vorrichtung (D) zur Regulierung der Beschleunigung oder der Verzögerung des Kraftstoffdurchsatzes eines Turbomotors, der mit einer Arbeitsturbine und einem Gasgenerator versehen ist, wobei die Vorrichtung Sensoren (1, 2, 3, 4, 14) aufweist, die an ein Regulierungsmittel (5) Informationen bezüglich einer ersten Drehzahl (NTL) der Arbeitsturbine, einer zweiten Drehzahl (Ng) des Gasgenerators, einer Innentemperatur (T4) von Gasen vom Eingang der Arbeitsturbine, des Außendrucks (P0) und der Außentemperatur (T0) liefern, und außerdem ein von dem Regulierungsmittel (5) aktiviertes Steuermittel (6) aufweist, um einen Kraftstoffdosierer (7) des Turbomotors zu betätigen, wobei die Regulierungsmittel (5) die dem Turbomotor zu liefernde Beschleunigung oder Verzögerung des Kraftstoffdurchsatzes ausgehend von mindestens einem optimalen Regelungsgesetz (8, 8', 8", 12, 12', 12") berechnet, wobei das Regelungsgesetz (8, 8', 8", 12, 12', 12") einen veränderten Hauptdurchsatz in Abhängigkeit von einer veränderten Drehzahl (Ng') bestimmt, wobei der veränderte Hauptdurchsatz von der Außentemperatur (T0) sowie dem Außendruck (P0) abhängt, und wobei die veränderte Drehzahl (Ng') der zweiten Drehzahl (Ng) des Gasgenerators entspricht, die durch die Außentemperatur (T0) verändert wurde,

**dadurch gekennzeichnet, dass** der veränderte Hauptdurchsatz gleich einem veränderten Hauptdurchsatz (CH') ist, der durch die folgende erste Gleichung erhalten wird, bei der CH' den veränderten Hauptdurchsatz, CH den dem Turbomotor zugeführten Kraftstoffdurchsatz, P0 den Außendruck, T0 die Außentemperatur, α eine erste Potenz und β eine zweite Potenz bezeichnen:

$$CH' = CH(\frac{1013}{P0})^\alpha (\frac{288}{T0})^\beta .$$

2. Vorrichtung (D) zur Regulierung der Beschleunigung oder der Verzögerung des Kraftstoffdurchsatzes eines Turbomotors, der mit einer Arbeitsturbine und einem Gasgenerator versehen ist, wobei die Vorrichtung Sensoren (1, 2, 3, 4, 14) aufweist, die an ein Regulierungsmittel (5) Informationen bezüglich einer ersten Drehzahl (NTL) der Arbeitsturbine, einer zweiten Drehzahl (Ng) des Gasgenerators, einer Innentemperatur (T4) von Gasen vom Eingang der Arbeitsturbine, des Außendrucks (P0) und der Außentemperatur (T0) liefern, und außerdem ein von dem Regulierungsmittel (5) aktiviertes Steuermittel (6) aufweist, um einen Kraftstoffdosierer (7) des Turbomotors zu betätigen, wobei die Regulierungsmittel (5) die dem Turbomotor zu liefernde Beschleunigung oder Verzögerung des Kraftstoffdurchsatzes ausgehend von mindestens einem optimalen Regelungsgesetz (8, 8', 8", 12, 12', 12") berechnet, wobei das Regelungsgesetz (8, 8', 8", 12, 12', 12") einen veränderten Hauptdurchsatz in Abhängigkeit von einer veränderten Drehzahl (Ng') bestimmt, wobei der veränderte Hauptdurchsatz von der Außentemperatur (T0) sowie dem Außendruck (P0) abhängt, und wobei die veränderte Drehzahl (Ng') der zweiten Drehzahl (Ng) des Gasgenerators entspricht, die durch die Außentemperatur (T0) verändert wurde, **dadurch gekennzeichnet, dass** der veränderte Hauptdurchsatz gleich einem veränderten Sekundärdurchsatz (CH") ist, der durch die folgende zweite Gleichung erhalten wird, bei der CH" den veränderten Sekundärdurchsatz, CH den dem Turbomotor zugeführten Kraftstoffdurchsatz, P0 den Außendruck, T0 die Außentemperatur, α eine erste Potenz und β eine zweite Potenz bezeichnen:

$$CH'' = CH(\frac{1013}{P0})^\alpha (\frac{288}{T0})^{\beta+1} .$$

3. Vorrichtung nach einem der Ansprüche 1 bis 2, **dadurch gekennzeichnet, dass** die erste Potenz α zwischen 0,9 und 1,05 beträgt.

4. Vorrichtung nach einem der Ansprüche 1 bis 3, **dadurch gekennzeichnet, dass** die zweite Potenz β zwischen 0,6 und 0,9 beträgt.

5. Vorrichtung nach einem der vorstehenden Ansprüche, **dadurch gekennzeichnet, dass** das Regulierungsmittel (5) die Steigerung des Kraftstoffdurchsatzes begrenzt, wenn die Ableitung der Innentemperatur (T4) über der Zeit einen Betrag aufweist, der größer oder gleich einem vorbestimmten Schwellenwert ist.

6. Vorrichtung nach Anspruch 5, **dadurch gekennzeichnet, dass** der vorbestimmte Schwellenwert in einem Diagramm, in dem die Innentemperatur (T4) auf der Abszisse und die Ableitung der Innentemperatur (T4) auf der Ordinate eingetragen sind, einer Grenzgraden mit der Gleichung

$$T4 + k\frac{d}{dt}(T4) = T4max$$ entspricht, wobei k

und T4max Konstanten sind.

7. Vorrichtung nach einem der vorstehenden Ansprüche, **dadurch gekennzeichnet, dass** das Steuermittel (6) einen unteren Anschlag aufweist.

8. Vorrichtung nach einem der vorstehenden Ansprüche, **dadurch gekennzeichnet, dass** das Steuermittel (6) ein Schrittmotor ist.

9. Verfahren zum Begrenzen der Steigerung des Kraftstoffdurchsatzes eines Turbomotors unter Einsatz einer Vorrichtung nach einem der Ansprüche 5 und 6, wenn der vorbestimmte Schwellenwert erreicht ist, **dadurch gekennzeichnet, dass** das Regulierungsmittel (5) während einer ersten Zeitdauer (t1) den Kraftstoffdurchsatz beibehält, wenn die Ableitung der Innentemperatur (T4) über der Zeit einen Wert aufweist, der größer oder gleich einem vorbestimmten Schwellenwert ist.

10. Verfahren nach Anspruch 9, **dadurch gekennzeichnet, dass**:

a) nach Ablauf der ersten Zeitdauer (t1) das Regulierungsmittel (5) den dem Turbomotor zu liefernden Kraftstoffdurchsatz ausgehend von mindestens einem herabgestuften Regelungsgesetz (13) während einer zweiten Zeitdauer (t2) berechnet,
b) nach Ablauf der zweiten Zeitdauer (t2) das Regulierungsmittel (5) den dem Turbomotor zu liefernden Kraftstoffdurchsatz ausgehend von dem bei Beschleunigung (8) optimalen Regelungsgesetz berechnet.

**11.** Verfahren nach Anspruch 10,
**dadurch gekennzeichnet, dass** das herabgestufte Regelungsgesetz (13) zu dem bei Beschleunigung (8) optimalen Regelungsgesetz verkleinert ist, wobei es dennoch größer als ein Regelungsgesetz bei normalem Betrieb (10) ist.

**12.** Verfahren nach Anspruch 9,
**dadurch gekennzeichnet, dass** nach Ablauf der ersten Zeitdauer (t1) das Regulierungsmittel (5) den dem Turbomotor zu liefernden Kraftstoffdurchsatz ausgehend von dem bei Beschleunigung optimalen Regelungsgesetz berechnet.

**Claims**

**1.** Device for regulation (D) in acceleration or in deceleration of the fuel flow rate of a turboengine, provided with a free turbine and a gas generator, comprising sensors (1,2,3,4,14) transmitting to a means for regulation (5) information relating to a first speed of rotation (NTL) of said free turbine, to a second speed of rotation (Ng) of said gas generator, to an internal temperature (T4) of the gasses at the inlet of the free turbine, to the external pressure (P0) then to the external temperature (T0), and further comprising a control means (6) activated by said means for regulation (5) to actuate a fuel metering device (7) of said turboengine, said means for regulation (5) evaluates in acceleration or in deceleration the flow rate of fuel to be delivered to said turboengine on the basis of at least one optimum regulation law (8,8',8'',12,12',12''), said regulation law (8,8',8'',12,12',12'') determining a main modulated flow rate as a function of a modulated speed of rotation (Ng'), said main modulated flow rate depending on the external temperature (T0) and on the external pressure (P0) and said modulated speed of rotation (Ng') corresponding to the second speed of rotation (Ng) of said gas generator modulated by the external temperature (T0),
**characterised in that** said main modulated flow rate is equal to a primary modulated flow rate (CH') which is obtained by the following first relationship where CH' represents said primary modulated flow rate, CH the flow rate of fuel delivered to the turboengine, P0 the external pressure, T0 the external temperature, $\alpha$ a first power and $\beta$ a second power:

$$CH' = CH \left(\frac{1013}{P0}\right)^{\alpha} \left(\frac{288}{T0}\right)^{\beta}$$

**2.** Device for regulation (D) in acceleration or in deceleration of the fuel flow rate of a turboengine, provided with a free turbine and a gas generator, comprising sensors (1,2,3,4,14) transmitting to a means for regulation (5) information relating to a first speed of rotation (NTL) of said free turbine, to a second speed of rotation (Ng) of said gas generator, to an internal temperature (T4) of the gasses at the inlet of the free turbine, to the external pressure (P0) then to the external temperature (T0), and further comprising a control means (6) activated by said means for regulation (5) to actuate a fuel metering device (7) of said turboengine, said means for regulation (5) evaluates in acceleration or in deceleration the flow rate of fuel to be delivered to said turboengine on the basis of at least one optimum regulation law (8,8',8'',12,12',12''), said regulation law (8,8',8'',12,12',12'') determining a main modulated flow rate as a function of a modulated speed of rotation (Ng'), said main modulated flow rate depending on the external temperature (T0) and on the external pressure (P0) and said modulated speed of rotation (Ng') corresponding to the second speed of rotation (Ng) of said gas generator modulated by the external temperature (T0),
**characterised in that** said main modulated flow rate is equal to a secondary modulated flow rate (CH'') which is obtained by the following second relationship where CH'' represents said secondary modulated flow rate, CH the flow rate of fuel delivered to the turboengine, P0 the external pressure, T0 the external temperature, $\alpha$ a first power and $\beta$ a second power:

$$CH'' = CH \left(\frac{1013}{P0}\right)^{\alpha} \left(\frac{288}{T0}\right)^{\beta+1}$$

**3.** Device according to any one of claims 1 to 2, **characterised in that** said first power $\alpha$ is comprised between 0.9 and 1.05.

**4.** Device according to any one of claims 1 to 3, **characterised in that** said second power $\beta$ is comprised between 0.6 and 0.9.

**5.** Device according to any one of the preceding claims, **characterised in that** said means for regulation (5) limits the increase of said fuel flow rate when the derivative of said internal temperature (T4) with respect to time has a value at least equal to a predetermined threshold.

**6.** Device according to claim 5,
**characterised in that** said predetermined threshold corresponds, in a diagram where said internal temperature (T4) is on the abscissa and said derivative of the internal temperature (T4) is on the ordinate, to a limit straight line of equation:

$$T4 + k\frac{d}{dt}(T4) = T4max,$$ k and T4max being constants.

7.　Device according to any one of the preceding claims, **characterised in that** said control means (6) possesses a lower limit stop.

8.　Device according to any one of the preceding claims, **characterised in that** said control means (6) is a stepping motor.

9.　Method implemented by a device according to any one of claims 5 and 6 for limiting the increase of the fuel flow rate of a turboengine when said predetermined threshold is reached, **characterised in that** said means for regulation (5) freezes, during a first duration (t1), said fuel flow rate when the derivative of said internal temperature (T4) with respect to time has a value at least equal to the predetermined threshold.

10.　Method according to claim 9, **characterised in that**:

　　a) At the end of the first duration (t1), said means for regulation (5) evaluates the flow rate of fuel to be delivered to said turboengine on the basis of at least one degraded regulation law (13) during a second duration (t2).
　　b) At the end of said second duration (t2), said means for regulation (5) evaluates the flow rate of fuel to be delivered to said turboengine on the basis of said optimum regulation law in acceleration (8).

11.　Method according to claim 10, **characterised in that** said degraded regulation law (13) is homothetic to said optimum regulation law in acceleration (8), while remaining greater than a regulation law in normal operation (10).

12.　Method according to claim 9, **characterised in that**, at the end of the first duration (t1), said means for regulation (5) evaluates the flow rate of fuel to be delivered to said turboengine on the basis of said optimum regulation law in acceleration (8).

Fig.1

Fig.2

Fig.3

Fig.4

Fig.5

Fig.6

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20021104308 A
- US 2001045088 A
- US 4195231 A
- GB 1257077 A
- US 4275557 A
- US 2002104308 A
- US 307451 A